# EUROPEAN PATENT SPECIFICATION

(11) **EP 2 216 940 B1**
(45) Date of publication and mention of the grant of the patent: **23.10.2013**
(21) Application number: 08870216.2
(22) Date of filing: 02.12.2008
(51) Int. Cl.: H04L 12/28, H04L 29/06, H04L 29/14

(54) **METHOD, SYSTEM AND DEVICE FOR SWITCHING SOURCE**
VERFAHREN, SYSTEM UND GERÄT ZUM SCHALTEN EINER QUELLE
PROCÉDÉ, SYSTÈME ET DISPOSITIF DE COMMUTATION DE SOURCE

(30) Priority: 27.12.2007 CN 200710304455
(43) Date of publication of application: 11.08.2010
(73) Proprietor: Huawei Technologies Co., Ltd., Longgang District, Shenzhen Guangdong 518129 (CN)
(72) Inventor: DONG, Xiaoqing, 518129 Shenzhen (CN); YIN, Yue, 518129 Shenzhen (CN); LI, Jin, 518129 Shenzhen (CN)
(74) Representative: Isarpatent
(86) International application number: PCT/CN2008/073300
(87) International publication number: WO 2009/086763

(56) References cited:
- CN-A- 1 645 858
- CN-A- 101 047 550
- CN-A- 101 068 155
- CN-A- 101 072 156
- US-A1- 2006 190 615
- US-A1- 2008 294 788
- BRYAN COLLEGE OF WILLIAM AND MARY AND SIPEERIOR TECHNOLOGIES P MATTHEWS AVAYA E SHIM LOCUS TELECOMMUNICATIONS D WILLIS UNAFFILIATE: "Concepts and Terminology for Peer to Peer SIP; draft-ietf-p2psip-concepts-01.txt", IETF STANDARD-WORKING-DRAFT, INTERNET ENGINEERING TASK FORCE, IETF, CH, vol. p2psip, no. 1, 15 November 2007 (2007-11-15), XP015053717, ISSN: 0000-0004
- LI CH ZHANG Y WANG Y JI MINE/BUPT L: "A SIP-based P2PSIP Client Protocol; draft-li-p2psip-client-protocol-00.t", IETF STANDARD-WORKING-DRAFT, INTERNET ENGINEERING TASK FORCE, IETF, CH, 12 November 2007 (2007-11-12), XP015054261, ISSN: 0000-0004

## Description

### FIELD OF THE TECHNOLOGY

The present invention relates to the field of communications, and more particularly to a source switching method, system, and device.

### BACKGROUND OF THE INVENTION

By using the Peer-to-Peer (P2P) technology, two or more PCs or other devices in the P2P network can directly communicate or collaborate with each other, and share the resources (such as processing capability, storage space, and data) with each other. The P2P technology is distributed computing in nature, and has the most important feature that the capability of each computer (especially user equipment) in the network can be fully utilized, thereby reducing the high expenditure (including software, hardware, communications, and human input) required in the conventional Client/Server network architecture due to the presence of the server, and avoiding the problems of computing capability bottleneck and single point failure caused by employment of the server. Therefore, through the P2P technology, the network system has a low operating cost and high extension capability.

US2006/190615A1 disclosed a peer-to-peer novel video streaming scheme in which each peer stores and streams videos to the requesting client peers. Each video is encoded into multiple descriptions and each description is placed on a different node. If a serving peer disconnects in the middle of a streaming session, the system searches for a replacement peer that stores the same video description and has sufficient uplink bandwidth. Employing multiple description coding in a peer-to-peer based network improves the robustness of the distributed streaming content in the event a serving peer is lost. Video quality can be maintained in the presence of server peers being lost. The video codec design and network policies have a significant effect on the streamed video quality. The system performance generally improves as the number of descriptions M for the video increases, which implies that a higher video quality can be obtained with the same network loading.

XP 015053717, "Concepts and Terminology for Peer to Peer SIP draft-ietf-p2psip-concepts-01", defines concepts and terminology for use of the Session Initiation Protocol in a peer-to-peer environment where the traditional proxy-registrar and message routing functions are replaced by a distributed mechanism that might be implemented using a distributed hash table or other distributed data mechanism with similar external properties. This document includes a high-level view of the functional relationships between the network elements defined herein, a conceptual model of operations, and an outline of the related open problems being addressed by the P2PSIP working group.

XP 015054261, "A SIP-based P2PSIP Client Protocol draft-li-p2psip-client-protocol-00", discloses the motivation, design guidelines and high level descriptions of peer-to-peer session initiation protocol (P2PSIP) client protocol, which is spoken between P2PSIP peers and P2PSIP clients. In this document, the necessity of P2PSIP Client is identified firstly. Then, two fundamental guidelines for the author's design are explained in details. Following these guidelines, the design of proposed protocol and new extensions to existing SIP (session initiation protocol) are described. Such a SIP-based protocol not only makes itself backward-compatible with the vast existing SIP devices, but also provides extra functions to satisfy some particular requirements raised by P2PSIP.

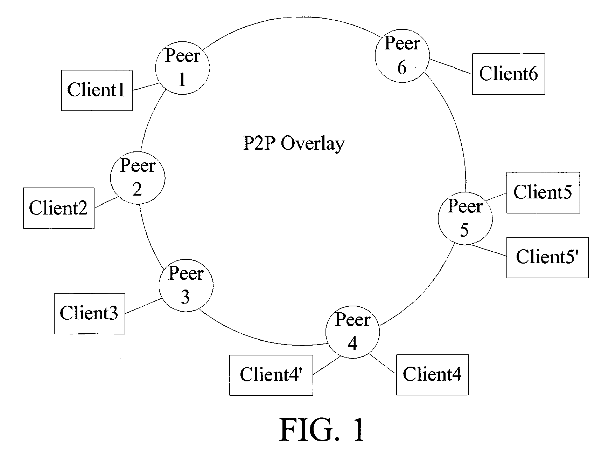

FIG. 1 is a schematic view of networking of a P2P overlay network having a Peer-Client structure. All the Peer nodes form the P2P overlay network, which has the functions of P2P searching and routing. The Client is subordinate to the Peer node, and interacts with other Peers or Clients through the routing and searching functions of the Peer node. A stable network device that supports the P2P technology can be used as the Peer node of the P2P overlay network to be in charge of the distributed storage and searching with the resource content as index in the P2P overlay network. At this time, the terminal node serving as the Client merely interacts and negotiates with the network device serving as the Peer node, and it is unnecessary to detect the specific topology in the P2P overlay network and the operating mechanism thereof. Thus, the interaction between terminal nodes subordinate to different network devices is separated through the stable network device, thereby reducing the mutual influence caused by interaction, and effectively avoiding the impact of the network problems that may occur in the P2P overlay network on the terminal nodes. Each network device saves, for example, a local resource table, a transaction table, a forwarding table, and a resource/value (Key/Value) table. The local resource table is configured to record the local (the terminal nodes subordinate to the network device) resource information that can provide services. The transaction table is configured to manage the label forwarding information corresponding to the resource contents. The forwarding table is configured to provide the forwarding information during the hardware forwarding operation of the network device. The Key/Value table is configured to record the resource information (each resource can be uniquely identified by an identifier key, for example, hashing filenames through the Hash Function to get a key that uniquely identifies the file) published in the P2P overlay network. The network device that supports the P2P technology is adopted as the Peer node, to intelligently act as an agent of service requirements for the terminal nodes and provide corresponding network services.

In the current P2P network having a Peer-Client structure with a network device serving as a Peer node, since the terminal node merely interacts with the network devices connected thereto, when the source end node that provides services has switching demand, for example, the source end node is in the event of a failure or exits the network, the receiving end nodes cannot find a new source end node that provides the same resource service, so that the service at the receiving end node is affected, the quality of experience (QoE) is reduced, and the user experience is undesirable.

### SUMMARY OF THE INVENTION

In order to reduce the effect of dynamic characteristic of source ends that provide a resource service on receiving ends in a P2P overlay network (in which a stable network device acts as a Peer node), the present invention is directed to a source switching method, system, and device. The technical solutions are described as follows.

The present invention is accomplished by the technical solutions according to the independent claims.

According to one aspect, the present invention provides a source switching method, which is applied to a Peer-to-Peer, P2P, network, comprising the following steps:
obtaining, by a network device (602) acting as a Peer node of the P2P network, information for switching a resource providing entity when sending resources obtained from a first resource providing entity (601) to receiving ends;
searching (102; 202), by the network device (602), for a second resource providing entity (603) that provides the same resources as the first resource providing entity (601) according to the information;
establishing (103; 203) a transmission path to the second resource providing entity (603);
obtaining, by the network device (602), the resources from the second resource providing entity (603) through the transmission path;
wherein after the step of obtaining the information for switching the resource providing entity, the method further comprises:
   obtaining, by the network device, a source switching identifier; and
   accordingly, the step of establishing the transmission path to the second resource providing entity further comprises:
      notifying network devices on the transmission path of the information that the network device has the source switching identifier.According to another aspect, the present invention provides a source switching system, which includes a network device, a first resource providing entity, and a second resource providing entity.

According to another aspect, the present invention provides a source switching system, which includes a network device, a first resource providing entity, and a second resource providing entity.

The first resource providing entity is configured to provide resources to receiving ends through the network device.

The network device is configured to obtain information for switching a resource providing entity, obtain a source switching identifier, search for the second resource providing entity that provides the same resources as the first resource providing entity according to the information, establish a transmission path to the second resource providing entity, and notify network devices on the transmission path of the information that the network device has the source switching identifier.

The second resource providing entity is configured to provide the resources to the receiving ends through the network device after switching is completed.

According to further aspect, the present invention provides a network device, which includes an obtaining module, a source switching identifier obtaining module, a searching module, and an establishing module.

The obtaining module is configured to obtain information for switching a resource

providing entity, when sending resources obtained from a first resource providing entity to receiving ends.

The source switching identifier obtaining module, configured to obtain a source switching identifier after the obtaining module obtains the information for switching the resource providing entity.

The searching module is configured to search for a second resource providing entity that provides the same resources as the first resource providing entity according to the information, after the obtaining module obtains the information for switching the resource providing entity.

The establishing module is configured to establish a transmission path to the second resource providing entity that has been found by the searching module, and obtain the resources from the second resource providing entity through the transmission path.

The technical solutions of the present invention have the following beneficial effects.

In the P2P network, when the network device detects that the entity for providing a resource service is required to be switched (for example, when the resource providing entity is in the event of a failure, the network at the resource providing entity side is in the event of a failure or is congested, or the quality of the resources provided by the entity for providing the resource service is undesirable), the network device is in charge of source switching, and searches for a new entity node capable of providing the same resource service. Therefore, the impact of source switching on the services at the receiving ends is lowered, the effect of dynamic characteristic of the source ends that provide a resource service on the receiving ends is reduced, and the user experience is effectively improved. Meanwhile, the request storm caused by new requests simultaneously initiated by multiple receiving ends that receive the resource service is effectively avoided.

### BRIEF DESCRIPTION OF THE DRAWINGS

FIG. 1 is a schematic view of networking of a P2P overlay network having a Peer-Client structure in the prior art;
FIG. 2 is a flow chart of a source switching method according to a first embodiment of the present invention;
FIG. 3 is a schematic view of information exchange of source switching according to the first embodiment of the present invention;
FIG. 4 is a schematic view of another information exchange of source switching according to the first embodiment of the present invention;
FIG. 5 is a flow chart of a source switching method according to a second embodiment of the present invention;
FIG. 6 is a schematic view of a source switching system according to a third embodiment of the present invention; and
FIG. 7 is a schematic view of a network device according to a fourth embodiment of the present invention.

### DETAILED DESCRIPTION OF THE EMBODIMENTS

In order to make the objectives, technical solutions, and advantages of the present invention more comprehensible, embodiments of the present invention are described in detail below with reference to the accompanying drawings.

According to the technical solutions of the present invention, in a P2P overlay network with a stable network device (for example, a network device of an operator) acting as a Peer node, when the network device detects information for switching a terminal node Client for providing a resource service, for example, the Client for providing the resource service exits the network, or the Client is in the event of a failure, and the switching information is unavailable for the resources, etc, the network device searches for a new node capable of providing the same resource service. As a result, the effect of dynamic characteristic of source ends that provide a resource service on receiving ends is reduced, and the user experience is effectively improved. The method is described as follows.

The network device obtains a message for switching a resource providing entity (that is, a terminal node), searches for a second resource providing entity that provides the same resources as a first resource providing entity according to the message, and establishes a transmission path to the second resource providing entity that provides the same resources and has been found. The network device is any stable network device except for a terminal device, and may be an Internet service provider (ISP) network device, a digital subscriber line access multiplexer (DSLAM), a router, or an enterprise network internal server. As the network device in the P2P overlay network is relatively stable and will not join or exit the network frequently, the reason for source switching demand generally lies in the changes of the terminal node Client subordinate to the network device.

Hereinafter, a first embodiment and a second embodiment are illustrated with an example that the network device is specifically an ISP network device and the terminal node for providing a resource service is in the event of a failure.

### Embodiment One

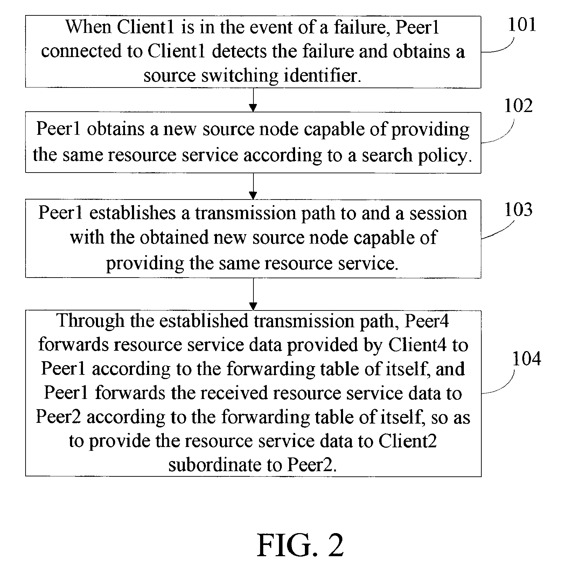

FIG. 2 is a flow chart of a source switching method according to the first embodiment of the present invention. Referring to FIG. 2, the schematic view of networking of the P2P overlay network in FIG. 1 is taken as an example, in which the Peer nodes in the overlay network are ISP network devices, and when Client1 subordinate to Peer1 provides a resource service to Client2 subordinate to Peer2, Client1 is in the event of a failure and cannot provide the resource service any more. At this time, Peer1 connected to Client1 is in charge of source switching, which includes the following steps.

In Step 101, when Client1 is in the event of a failure, Peer1 connected to Chent1 detects the failure and obtains a source switching identifier. The specific process is as follows.

When Client1 is in the event of a failure, the source node needs to be switched. Peer1 receives the failure information, and firstly detects the failure. At this time, Peer1 maintains the following to be unchanged: the established transmission path, transaction table, forwarding table, and other relevant states (such as QoS information and signaling parameters) with Client2 that receives the resource service.

Furthermore, in the P2P overlay network, each resource transmission path has a source switching identifier, that is, the same resource key provided by the Peer that provides the resource service is uniquely corresponding to a source switching identifier, for example, Peer1 provides the same resource key service to Peer2 and Peer3, and a tree-shaped transmission path is formed, that is, from Peer1 to Peer2, and from Peer1 to Peer3. As the service is provided for the same resource key, the tree-shaped transmission path merely needs one source switching identifier correspondingly. The source switching identifier is configured to identify that the Peer having the source switching identifier on the transmission path of the resource service is in charge of source switching, when the source Client on the transmission path of the resource key is in the event of a failure. The source switching identifier may be obtained through prior negotiation of the source end Peer for providing the resource service and the receiving end Peer of the resource service, and is saved in the transaction table of the Peer. For example, in the transaction table of the Peer, entries corresponding to resource keys and source switching identifiers are saved, when the source switching identifier in the entry is 1, it is indicated that the Peer node is in charge of source switching, and when the source switching identifier is 0, it is indicated that the Peer node is not in charge of source switching.

The source switching identifier is obtained through prior negotiation, and may also be generated by Peer1 after detecting the failure. For example, after detecting the failure, Peer1 generates a source switching identifier for identifying that Peer1 is in charge of source switching in its transaction table. As the other Peer nodes on the resource service path are not responsible for failure detection, they will not generate source switching identifiers in respective transaction tables, and thus the Peer node in charge of source switching at this time can be uniquely determined. The method for obtaining the source switching identifier is not limited to the embodiment of the present invention.

In view of the above, before Client1 provides a resource service for Client2, when establishing a forwarding path, the source end Peer1 for providing the resource service negotiates with the receiving end Peer2 of the resource service to obtain a source switching identifier, and when a failure occurs, Peer1 is in charge of source switching.

In Step 102, Peer1 obtains the source node capable of providing the same resource service according to a search policy. The specific process is as follows.

When obtaining the source node capable of providing the same resource service, Peer1 searches for a new source node according to the search policy by Peer1, for example, the search policy may be a local search policy, that is, Peer1 searches for the new source node capable of providing the same resource service according to the resource table of itself. When finding multiple Clients capable of providing the same resource service, Peer1 can select a new source Client for providing the resource service for Client2 from the multiple Clients capable of providing the same resource service through a selection policy, for example, a transmission bandwidth priority or transmission rate priority policy. The search policy may also be network searching, that is, Peer1 finds a Root Peer node that saves the key through P2P routing according to the resource key, and then the Root node finds the optimal Peer capable of providing the resource key from the saved Key/Value tale, and returns the address of the optimal Peer to Peer1. Peer1 adopts a network search policy. When the returned optimal Peer is a Peer that is not Peer1, the obtained new Client is accordingly a Client node subordinate to the Peer that is not Peer1. When the returned optimal Peer is Peer1, the obtained new Client is accordingly a Client subordinate to Peer1 and capable of providing the same resource service. The search policy can be a local searching priority policy, and the network searching is performed when the local searching has no result. The search policy adopted for searching for the new source node is not limited to the embodiment of the present invention, and any policy that can be employed to find the new source node capable of providing the same resource service is within the scope of the present invention.

In Step 103, Peer1 establishes a transmission path to and a session with the found new source node capable of providing the same resource service.

Hereinafter, this embodiment is illustrated with an example that Peer1 adopts the network search policy for searching, and the found optimal Peer is Peer4.

The specific process is as follows.

In Step 103A, Peer1 sends a service request message to Peer4 through signaling, and notifies Peer4 that Peer1 has the source switching identifier through the service request message.

In Step 103B, after receiving the service request message, Peer4 creates an entry corresponding to the service request message in the transaction table of itself, finds Client4 that provides the resource service according to the resource table of itself, and sends a service request message to Client4.

The creating, by Peer4, the corresponding entry in the transaction table of itself includes setting the corresponding resource key in the transaction table and the source switching identifier in the source switching identifier entry to 0. Peer4 finds the Client capable of providing the same resource service according to the resource table of itself. When finding multiple Clients capable of providing the same resource service, Peer4 may select a new source Client through a selection policy, for example, the transmission bandwidth priority or transmission rate priority policy. In this embodiment, an example is given below for illustration, in which the new source Client selected by Peer4 is Client4.

In Step 103C, Client4 returns a successful response message of the service request to Peer4.

In Step 103D, Peer4 receives the successful response message returned by Client4, updates the entries corresponding to the service request message in the transaction table and the forwarding table of itself, and returns the successful response message of the service request to Peer1.

In Step 103E, Peer1 receives the successful response message of the service request returned by Peer4, and updates the entries corresponding to the service request message in the transaction table and the forwarding table of itself.

In Step 103C, if Client4 returns a failure response message of the service request to Peer4, Peer4 continuously searches for other clients capable of providing the same resource service according to the resource table of itself. When failing in finding other Clients, Peer4 deletes the service request information saved in the transaction table of itself to release the resource space, and returns a failure response message of the service request to Peer1.

In Step 104, through the established transmission path, Peer4 forwards resource service data provided by Client4 to Peer1 according to the forwarding table of itself, and Peer1 forwards the received resource service data to Peer2 according to the forwarding table of itself, so as to provide the resource service data to Client2 subordinate to Peer2.

Through Steps 101 to 104, when the source Client1 is in the event of a failure, Peer1 finds the new source node that provides the same resource service, and the process of source switching is successfully completed.

The embodiment of the present invention may further include the following steps.

When the resource service provided for Client2 is not finished, while Client4 that provides the resource service exits the network due to a failure and thus cannot provide the resource service any more, since Peer1 has the source switching identifier, Peer1 can still take charge of the searching for the new source node capable of providing the same resource service. The searching process is the same as that described above, and will not be repeated herein.

The search policy adopted when searching for the new source node that provides the same resource service by Peer1 is not limited to the embodiment of the present invention, and any policy that can be employed to find the new source is within the scope of the present invention, which is exemplified as follows.

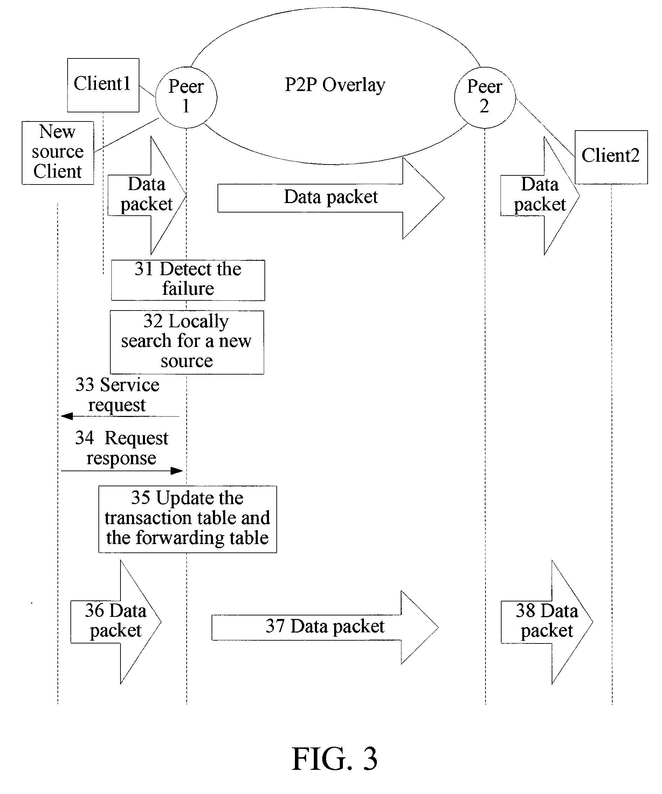

FIG. 3 is a schematic view of information exchange of finding the new source Client that provides the same resource service locally by using the local search policy when Peer1 is in charge of source switching according to the first embodiment of the present invention. Referring to FIG. 3, Client1 is in the event of a failure and exits the network, and will not provide the resource service to the receiving end Client2 subordinate to Peer2. In block 31, Peer1 detects the failure of Client1, obtains the source switching identifier, and finds a new source Client that provides the same resource service by using the local search policy in block 31. In block 33, Peer1 then sends a service request to the new source Client, and receives a request response message returned by the new source Client (herein, the request response message returned by the new source Client is considered as a successful message) in block 34. Then, Peer1 updates the transaction table and the forwarding table of itself in block 35. Afterwards, in blocks 36-38, the new source Client sends data of the requested resources to Peer1, Peer1 receives the data, and forwards the data to Peer2 according to the forwarding table of itself, Peer2 receives the data forwarded by Peer1, and forwards the data to the receiving end Client2 according to the forwarding table of itself.

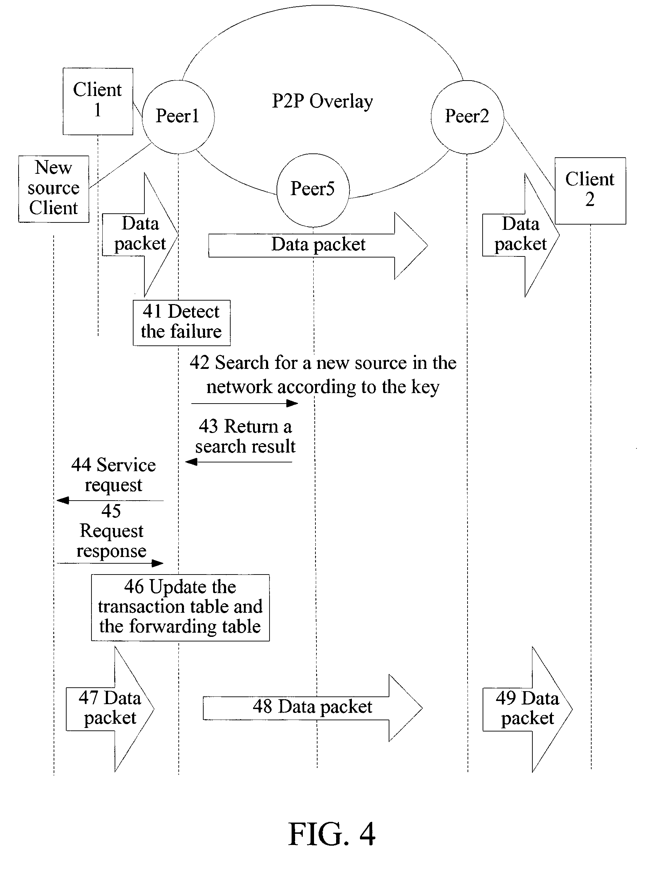

FIG. 4 is a schematic view of information exchange of finding the new source Client that provides the same resource service by using the network search policy when Peer1 is in charge of source switching according to the first embodiment of the present invention. Referring to FIG. 4, Client 1 is in the event of a failure and exits the network, and will not provide the resource service to the receiving end Client2 subordinate to Peer2. In block 41, Peer1 detects the failure of Client1, obtains the source switching identifier, and searches for a new source in the network according to the key in block 42 and 43; in this embodiment, Peer1 finds the optimal Peer to be Peer1 itself by using the network search policy. At this time, Peer1 has a subordinate new source Client capable of providing the same resource service. In block 44, Peer1 sends a service request to the new source Client, and receives a request response returned by the new source Client (herein, the request response message returned by the new source Client is considered as a successful message) in block 45, and then updates the transaction table and the forwarding table of itself in block 46. Then in blocks 47-49, the new source Client sends data that provides the same resource service to Peer1. Peer1 receives the data, and forwards the data to Peer2 according to the forwarding table of itself, Peer2 receives the data forwarded by Peer1, and forwards the data to the receiving end Client2 according to the forwarding table of itself.

In the embodiment of the present invention, when Peer1 provides the same resources to multiple Peers (such as Peer4, Peer5, ...,), and each Peer may have multiple subordinate Clients (for example, Peer4 may have subordinate Client4A and Client4B in addition to Client4), the source switching method according to the embodiment of the present invention can effectively avoid the request storm caused by network search requests simultaneously initiated by all the Clients when detecting a failure, and avoid a single point failure for the Root Peer node can not handle massive search requests simultaneously during network searching in the prior art.

According to the method of the embodiment of the present invention, when the Client for providing the resource service has switching demand, the Peer node (ISP network device) connected to the Client is in charge of source switching, and searches for the new source node capable of providing the same resource service. Therefore, the effect of dynamic characteristic of the source ends that provide a resource service on the receiving ends is reduced, and the user experience is improved. Meanwhile, the request storm caused by new requests simultaneously initiated by multiple receiving ends that receive the resource service and the single point failure resulting from the limited capacity of the Root node upon network searching are effectively avoided.

### Embodiment Two

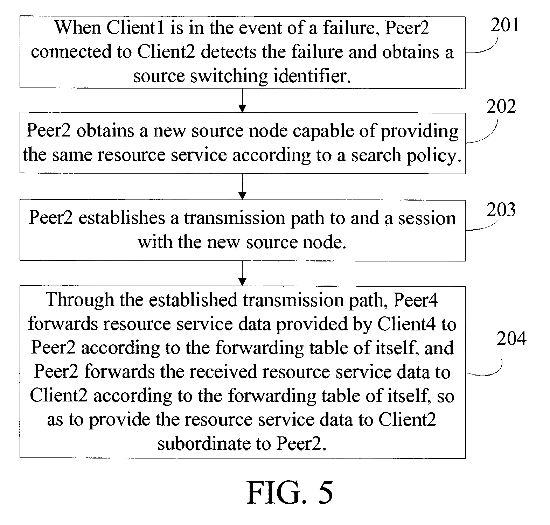

FIG. 5 is a flow chart of a source switching method according to the second embodiment of the present invention. Referring to FIG. 5, the schematic view of networking of the P2P overlay network in FIG. 1 is taken as an example, in which the Peer nodes in the overlay network are ISP network devices, each ISP network device has at least one subordinate terminal node Client, and when Client1 subordinate to Peer1 provides a resource service to Client2 subordinate to Peer2, Client1 is in the event of a failure and cannot provide the resource service any more. At this time, Peer2 connected to Client2 is in charge of source switching, which includes the following steps.

In Step 201, when Client1 is in the event of a failure, Peer2 connected to Client2 detects the failure and obtains a source switching identifier.

When Client1 is in the event of a failure, Peer2 detects the failure and maintains the following to be unchanged: the established transmission path, transaction table, forwarding table, and other relevant states (such as QoS information and signaling parameters) with Client2.

At this time, in the embodiment of the present invention, Peer2 that detects the failure obtains the source switching identifier of the resource transmission path, that is, Peer2 is in charge of source switching.

In Step 202, Peer2 obtains a new source node capable of providing the same resource service according to a search policy.

Hereinafter, this embodiment is illustrated with an example that Peer2 adopts the network search policy for searching, and the found optimal Peer is Peer4.

In Step 203, Peer2 establishes a transmission path to and a session with the new source node.

Peer2 sends a service request message to Peer4 through signaling, and notifies Peer4 that Peer2 has the source switching identifier through the service request message. Through Step 203, Peer2 successfully establishes a transmission path to Client4 subordinate to Peer4 and capable of providing the same resource service through Peer4.

In Step 204, through the established transmission path, Peer4 forwards resource service data provided by Client4 to Peer2 according to the forwarding table of itself, and Peer2 forwards the received resource service data to Client2 according to the forwarding table of itself, so as to provide the resource service data to Client2 subordinate to Peer2.

Through Steps 201 to 204, when the source Client1 is in the event of a failure, Peer2 is in charge of source switching, and finds the new source Client that provides the same resource service, so that the process of source switching is successfully completed.

The embodiment of the present invention further includes the following steps.

When the resource service provided for Client2 is not finished, while Client4 that provides the resource service exits the network due to a failure and thus cannot provide the resource service any more, since Peer2 has the source switching identifier, Peer2 may still take charge of the searching for the new source node capable of providing the same resource service. The searching process is the same as that described above, and will not be repeated herein.

The search policy adopted when searching for the new source Client that provides the same resource service by Peer2 is not limited to the embodiment of the present invention, and any policy that can be employed to find the new source is within the scope of the present invention.

According to the method of the embodiment of the present invention, when the Client for providing the resource service has switching demand, the Peer node (ISP network device) connected to the receiving end Client detects the switching demand, takes charge of source switching, and searches for the new source node capable of providing the same resource service. Therefore, the effect of dynamic characteristic of the source ends that provide a resource service on the receiving ends is reduced, and the user experience is improved. Meanwhile, the request storm caused by new requests simultaneously initiated by multiple receiving ends that receive the resource service and the single point failure resulting from the limited capacity of the Root node upon network searching are effectively avoided.

### Embodiment Three

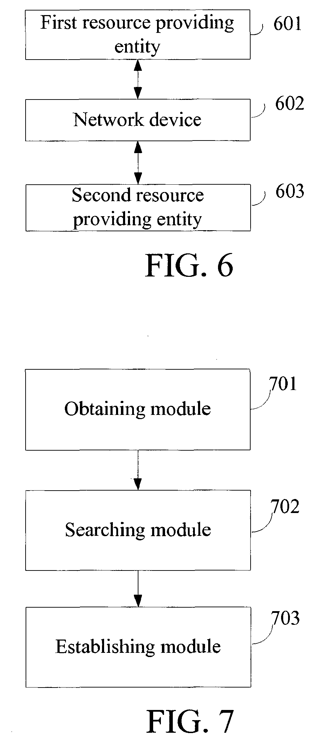

FIG. 6 shows a source switching system according to the third embodiment of the present invention. Referring to FIG. 6, the system includes a network device 602, a first resource providing entity 601, and a second resource providing entity 603.

The first resource providing entity 601 is configured to provide resources to receiving ends through the network device 601.

The network device 602 is configured to obtain information for switching a resource providing entity, search for the second resource providing entity 603 that provides the same resources as the first resource providing entity 601 according to the information, and establish a transmission path to the second resource providing entity 603.

The second resource providing entity 603 is configured to provide the resources to the receiving ends through the network device 602 after switching is completed.

The network device 602 includes a network device connected to the first resource providing entity 601, and is configured to obtain the information for switching the resource providing entity, search for the second resource providing entity 603 that provides the same resources as the first resource providing entity 601 according to a local search policy, and establish the transmission path to the second resource providing entity 603 that has been found.

Alternatively, the network device 602 is configured to obtain the information for switching the resource providing entity, search for a second network device that provides the same resource service according to a network search policy, such that the second network device obtains the second resource providing entity 603 that provides the same resource service as the first resource providing entity 601, and establish the transmission path to the second resource providing entity 603 through the second network device.

The network device 602 includes a network device connected to the receiving ends, and is adapted to obtain the information for switching the resource providing entity, search for the second resource providing entity 603 that provides the same resources as the first resource providing entity 601 according to a local search policy, and establish the transmission path to the second resource providing entity 603.

Alternatively, the network device 602 is adapted to obtain the information for switching the resource providing entity, search for a second network device that provides the same resource service according to a network search policy, such that the second network device obtains the second resource providing entity 603 that provides the same resource service as the first resource providing entity 601, and establish the transmission path to the second resource providing entity 603.

According to the system of the embodiment of the present invention, when the resource providing entity that provides the resource service has switching demand, the network device is in charge of source switching, and searches for the new resource providing entity capable of providing the same resource service. Therefore, the impact of the failure on the receiving ends is lowered, the effect of dynamic characteristic of the resource providing entity on the receiving ends is reduced, and the user experience is improved. Meanwhile, the request storm and the single point failure resulting from the limited capacity of the Root node are effectively avoided, where the request storm is caused by new requests simultaneously initiated by multiple receiving ends that receive the resource service when the source ends for providing the resource service have the switching demand during network searching.

### Embodiment Four

FIG. 7 shows a network device according to the fourth embodiment of the present invention. Referring to FIG. 7, the network device includes an obtaining module 701, a searching module 702, and an establishing module 703.

The obtaining module 701 is configured to obtain information for switching a resource providing entity, when sending resources obtained from a first resource providing entity to receiving ends.

The searching module 702 is configured to search for a second resource providing entity that provides the same resources as the first resource providing entity according to the information, after the obtaining module 701 obtains the information for switching the resource providing entity.

The establishing module 703 is configured to establish a transmission path to the second resource providing entity that has been found by the searching module 702, and obtain the resources from the second resource providing entity through the transmission path.

The network device further includes a policy module.

The policy module is configured to provide a search policy adopted when the searching module 702 searches for the second resource providing entity.

The network device further includes a maintaining module.

The maintaining module is configured to maintain the connection with the receiving ends after the obtaining module 701 obtains the information for switching the resource providing entity, and send the obtained resources to the receiving ends through an original transmission path between the network device and the receiving ends after the resources are obtained from the second resource providing entity.

The network device further includes a source switching identifier obtaining module.

The source switching identifier obtaining module is configured to obtain a source switching identifier after the obtaining module 701 obtains the information for switching the resource providing entity.

Accordingly, the establishing module 703 further includes a notifying unit.

The notifying unit is configured to notify the information that the network device has the source switching identifier to network devices on the transmission path, when establishing the transmission path to the second resource providing entity.

The network device according to the embodiment of the present invention can detect the information that the Client that provides the resource service has switching demand (for example, when the Client is in the event of a failure and exits the network, and will not provide the service any more), and search for a new node capable of providing the same resource service. Therefore, the effect of dynamic characteristic of the source ends that provide a resource service on the receiving ends is reduced, the user experience is improved, and the request storm caused by new requests simultaneously initiated by multiple receiving ends that receive the resource service is effectively avoided.

According to the technical solutions of the embodiments of the present invention, in the P2P overlay network, when the Client for providing the resource service has switching demand, the stable network device that serves as the Peer node is in charge of source switching, and searches for the new resource providing entity capable of providing the same resource service. Therefore, the effect of dynamic characteristic of the source ends that provide a resource service on the receiving ends is reduced, and the user experience is improved. Meanwhile, the request storm caused by new requests simultaneously initiated by multiple receiving ends that receive the resource service and the single point failure resulting from the limited capacity of the Root node upon network searching are effectively avoided.

Part of the steps in the embodiments of the present invention can be substantially embodied in the form of a software product, and the corresponding software program may be stored in a readable storage medium such as an optical disk or a hard disk.

The above description is merely specific embodiments of the present invention, and is not intended to limit the present invention. As for persons of ordinary skill in the art, any modification, equivalent replacement, and improvement made without departing from the principle of the above embodiments shall fall within the protection scope of the technical solution.

## Claims

1. A source switching method, applied to a Peer-to-Peer, P2P, network, comprising the steps of:
obtaining, by a network device (602) acting as a Peer node of the P2P network, information for switching a resource providing entity when sending resources obtained from a first resource providing entity (601) to receiving ends;
searching (102; 202), by the network device (602), for a second resource providing entity (603) that provides the same resources as the first resource providing entity (601) according to the information;
establishing (103; 203) a transmission path to the second resource providing entity (603);
obtaining, by the network device (602), the resources from the second resource providing entity (603) through the transmission path;
wherein after the step of obtaining the information for switching the resource providing entity, the method further comprises:
obtaining, by the network device, a source switching identifier; and
accordingly, the step of establishing the transmission path to the second resource providing entity further comprises:
notifying network devices on the transmission path of the information that the network device has the source switching identifier.

2. The source switching method according to claim 1, wherein the network device (602) is connected to the first resource providing entity (601); and accordingly the steps of
searching (102; 202), by the network device (602), for a second resource providing entity (603) that provides the same resources as the first resource providing entity (601) according to the information, and establishing a transmission path to the second resource providing entity (603) comprise:
searching for the second resource providing entity (603) that provides the same resources as the first resource providing entity (601) according to a local search policy, and establishing the transmission path to the second resource providing entity (603) that has been found; or
searching for a second network device that provides the same resource service as the first resource providing entity (601) according to a network search policy, such that the second network device obtains the second resource providing entity (603) that provides the same resource service, and establishing, by the second network device, the transmission path to the obtained second resource providing entity (603) that provides the same resource service.

3. The source switching method according to claim 1, wherein the network device (602) is connected to the receiving ends; and accordingly the steps of
searching (102; 202), by the network device (602), for a second resource providing entity (603) that provides the same resources as the first resource providing entity (601) according to the information, and establishing (103; 203) a transmission path to the second resource providing entity (603) comprise:
searching for a second resource providing entity (603) that provides the same resources as the first resource providing entity (601) according to a local search policy, and establishing a transmission path to the second resource providing entity (603) that has been found; or
searching for a second network device that provides the same resource service as the first resource providing entity (601) according to a network search policy, such that the second network device obtains a second resource providing entity (603) that provides the same resource service, and establishing the transmission path to the obtained second resource providing entity (603) that provides the same resource service.

4. The source switching method according to any one of claims 1 to 3, wherein after the step of obtaining the information for switching the resource providing entity, the method further comprises:
maintaining, by the network device (602), the connection with the receiving ends, and after obtaining the resources from the second resource providing entity (603), sending the obtained resources to the receiving ends through an original transmission path between the network device and the receiving ends.

5. The source switching method according to claim 4, further comprising:
after obtaining information for switching the second resource providing entity (603), continuously searching, by the network device (602), for a third resource providing entity that provides the same resources, and establishing a transmission path to the third resource providing entity that provides the same resources and has been found through continuous searching.

6. A network device (602) for source switching, **characterized by** comprising:
an obtaining module (701), configured to obtain information for switching a resource providing entity, when sending resources obtained from a first resource providing entity (601) to receiving ends;
a source switching identifier obtaining module, configured to obtain a source switching identifier after the obtaining module (701) obtains the information for switching the resource providing entity;
a searching module (702), configured to search for a second resource providing entity (603) that provides the same resources as the first resource providing entity (601) according to the information for switching the resource providing entity obtained by the obtaining module (701); and
an establishing module (703), configured to establish a transmission path to the second resource providing entity (603) that has been found by the searching module (702), and obtain the resources from the second resource providing entity (603) through the transmission path;
wherein the establishing module (703) further comprises:
a notifying unit, configured to notify the information that the network device (602) has the source switching identifier to network devices on the transmission path, when establishing the transmission path to the second resource providing entity (603), and
the network device (602) acts as a Peer node in a Peer-to-Peer network.

7. The network device according to claim 6, further comprising:
a policy module, configured to provide a search policy adopted when the searching module searches for the second resource providing entity (603).

8. The network device according to claim 6 or 7, further comprising:
a maintaining module, configured to maintain the connection with the receiving ends after the obtaining module (701) obtains the information for switching the resource providing entity, and send the obtained resources to the receiving ends through an original transmission path between the network device (602) and the receiving ends after the resources are obtained from the second resource providing entity (603).

9. A source switching system, comprising a network device (602) according to any one of claims 6-8, a first resource providing entity (601), and a second resource providing entity (603), wherein
the first resource providing entity (601) is configured to provide resources to receiving ends through the network device (602);
the network device (602) is configured to obtain information for switching a resource providing entity, obtain a source switching identifier, search for the second resource providing entity (603) that provides the same resources as the first resource providing entity (601) according to the information, establish a transmission path to the second resource providing entity (603), and notify network devices on the transmission path of the information that the network device (602) has the source switching identifier; and
the second resource providing entity (603) is configured to provide the resources to the receiving ends through the network device (602) after switching is completed.

10. The source switching system according to claim 9, wherein the network device (602) is connected to the first resource providing entity (601), and is configured to obtain the information for switching the resource providing entity, obtain a source switching, search for the second resource providing entity (603) that provides the same resources as the first resource providing entity (601) according to a local search policy, and establish the transmission path to the second resource providing entity (603) that has been found; or
the network device (602) is configured to obtain the information for switching the resource providing entity, obtain a source switching identifier, search for a second network device that provides the same resource service as the first resource providing entity (601) according to a network search policy, such that the second network device obtains the second resource providing entity (603) that provides the same resource service as the first resource providing entity (601), and establish the transmission path to the second resource providing entity (603) through the second network device.

11. The source switching system according to claim 9, wherein the network device (602) is connected to the receiving ends, and is configured to obtain the information for switching the resource providing entity, obtain a source switching identifier, search for the second resource providing entity (603) that provides the same resources as the first resource providing entity (601) according to a local search policy, and establish the transmission path to the second resource providing entity (603) that has been found; or
the network device (602) is configured to obtain the information for switching the resource providing entity, obtain a source switching identifier, search for a second network device that provides the same resource service as the first resource providing entity (601) according to a network search policy, such that the second network device obtains the second resource providing entity (603) that provides the same resource service as the first resource providing entity (601), and establish the transmission path to the second resource providing entity (603).

## Patentansprüche

1. Verfahren zum Wechseln einer Quelle, angewandt auf ein Partner-zu-Partner- bzw. P2P-Netzwerk, die folgenden Schritte umfassend:
Erhalten, durch eine Netzwerkvorrichtung (602), die als ein Partnerknoten des P2P-Netzwerks fungiert, von Informationen zum Wechseln einer Betriebsmittel bereitstellenden Instanz, wenn Betriebsmittel, die von einer ersten Betriebsmittel bereitstellenden Instanz (601) erhalten wurden, zu empfangenden Enden gesandt werden;
Suchen (102; 202), durch die Netzwerkvorrichtung (602), nach einer zweiten Betriebsmittel bereitstellenden Instanz (603), die die gleichen Betriebsmittel wie die erste Betriebsmittel bereitstellende Instanz (601) bereitstellt, gemäß den Informationen;
Einrichten (103; 203) eines Übertragungswegs zu der zweiten Betriebsmittel bereitstellenden Instanz (603);
Erhalten, durch die Netzwerkvorrichtung (602), der Betriebsmittel von der zweiten Betriebsmittel bereitstellenden Instanz (603) durch den Übertragungsweg;
wobei das Verfahren nach dem Schritt des Erhaltens der Informationen zum Wechseln der Betriebsmittel bereitstellenden Instanz ferner umfasst:
Erhalten, durch die Netzwerkvorrichtung, einer Quellenwechselkennung; und dementsprechend der Schritt des Einrichtens des Übertragungswegs zu der zweiten Betriebsmittel bereitstellenden Instanz ferner umfasst:
Benachrichtigen von Netzwerkvorrichtungen im Übertragungsweg über die Information, dass die Netzwerkvorrichtung über die Quellenwechselkennung verfügt.

2. Verfahren zum Wechseln einer Quelle nach Anspruch 1, wobei die Netzwerkvorrichtung (602) mit der ersten Betriebsmittel bereitstellenden Instanz (601) verbunden ist; und dementsprechend die folgenden Schritte des Suchens (102; 202), durch die Netzwerkvorrichtung (602), nach einer zweiten Betriebsmittel bereitstellenden Instanz (603), die die gleichen Betriebsmittel wie die erste Betriebsmittel bereitstellende Instanz (601) bereitstellt, gemäß den Informationen, und Einrichtens eines Übertragungswegs zu der zweiten Betriebsmittel bereitstellenden Instanz (603) umfassen:
Suchen nach der zweiten Betriebsmittel bereitstellenden Instanz (603), die die gleichen Betriebsmittel wie die erste Betriebsmittel bereitstellende Instanz (601) bereitstellt, gemäß einem lokalen Suchkonzept und Einrichten des Übertragungswegs zu der zweiten Betriebsmittel bereitstellenden Instanz (603), die gefunden wurde; oder
Suchen nach einer zweiten Netzwerkvorrichtung, die den gleichen Betriebsmitteldienst wie die erste Betriebsmittel bereitstellende Instanz (601) bereitstellt, gemäß einem Netzwerk-Suchkonzept, so dass die zweite Netzwerkvorrichtung die zweite Betriebsmittel bereitstellende Instanz (603), die den gleichen Betriebsmitteldienst bereitstellt, erhält, und Einrichten, durch die zweite Netzwerkvorrichtung, des Übertragungswegs zu der erhaltenen zweiten Betriebsmittel bereitstellenden Instanz (603), die den gleichen Betriebsmitteldienst bereitstellt.

3. Verfahren zum Wechseln einer Quelle nach Anspruch 1, wobei die Netzwerkvorrichtung (602) mit den empfangenden Enden verbunden ist; und dementsprechend die folgenden Schritte des Suchens (102; 202), durch die Netzwerkvorrichtung (602), nach einer zweiten Betriebsmittel bereitstellenden Instanz (603), die die gleichen Betriebsmittel wie die erste Betriebsmittel bereitstellende Instanz (601) bereitstellt, gemäß den Informationen, und Einrichtens (103; 203) eines Übertragungswegs zu der zweiten Betriebsmittel bereitstellenden Instanz (603) umfassen:
Suchen nach einer zweiten Betriebsmittel bereitstellenden Instanz (603), die die gleichen Betriebsmittel wie die erste Betriebsmittel bereitstellende Instanz (601) bereitstellt, gemäß einem lokalen Suchkonzept und Einrichten eines Übertragungswegs zu der zweiten Betriebsmittel bereitstellenden Instanz (603), die gefunden wurde; oder
Suchen nach einer zweiten Netzwerkvorrichtung, die den gleichen Betriebsmitteldienst wie die erste Betriebsmittel bereitstellende Instanz (601) bereitstellt, gemäß einem Netzwerk-Suchkonzept, so dass die zweite Netzwerkvorrichtung eine zweite Betriebsmittel bereitstellende Instanz (603), die den gleichen Betriebsmitteldienst bereitstellt, erhält, und Einrichten des Übertragungswegs zu der erhaltenen zweiten Betriebsmittel bereitstellenden Instanz (603), die den gleichen Betriebsmitteldienst bereitstellt.

4. Verfahren zum Wechseln einer Quelle nach einem der Ansprüche 1 bis 3, wobei das Verfahren nach dem Schritt zum Erhalten der Informationen zum Wechseln der Betriebsmittel bereitstellenden Instanz ferner umfasst:
Aufrechterhalten, durch die Netzwerkvorrichtung (602), der Verbindung mit den empfangenden Enden und, nach Erhalten der Betriebsmittel von der zweiten Betriebsmittel bereitstellenden Instanz (603), Senden der erhaltenen Betriebsmittel durch einen ursprünglichen Übertragungsweg zwischen der Netzwerkvorrichtung und den empfangenden Enden zu den empfangenden Enden.

5. Verfahren zum Wechseln einer Quelle nach Anspruch 4, ferner umfassend:
nach Erhalten von Informationen zum Wechseln der zweiten Betriebsmittel bereitstellenden Instanz (603), kontinuierliches Suchen, durch die Netzwerkvorrichtung (602), nach einer dritten Betriebsmittel bereitstellenden Instanz, die die gleichen Betriebsmittel bereitstellt, und Einrichten eines Übertragungswegs zu der dritten Betriebsmittel bereitstellenden Instanz, die die gleichen Betriebsmittel bereitstellt und durch kontinuierliches Suchen gefunden wurde.

6. Netzwerkvorrichtung (602) zum Wechseln einer Quelle, **dadurch gekennzeichnet, dass** sie Folgendes umfasst:
ein Erhaltungsmodul (701), konfiguriert zum Erhalten von Informationen zum Wechseln einer Betriebsmittel bereitstellenden Instanz, wenn Betriebsmittel, die von einer ersten Betriebsmittel bereitstellenden Instanz (601) erhalten wurden, zu empfangenden Enden gesandt werden;
ein Quellenwechselkennung-Erhaltungsmodul, konfiguriert zum Erhalten einer Quellenwechselkennung, nachdem das Erhaltungsmodul (701) die Informationen zum Wechseln der Betriebsmittel bereitstellenden Instanz erhält;
ein Suchmodul (702), konfiguriert zum Suchen nach einer zweiten Betriebsmittel bereitstellenden Instanz (603), die die gleichen Betriebsmittel wie die erste Betriebsmittel bereitstellende Instanz (601) bereitstellt, gemäß den Informationen zum Wechseln der Betriebsmittel bereitstellenden Instanz, die von dem Erhaltungsmodul (701) erhalten wurden; und
ein Einrichtungsmodul (703), konfiguriert zum Einrichten eines Übertragungswegs zu der zweiten Betriebsmittel bereitstellenden Instanz (603), die von dem Suchmodul (702) gefunden wurde, und Erhalten der Betriebsmittel von der zweiten Betriebsmittel bereitstellenden Instanz (603) durch den Übertragungsweg;
wobei das Einrichtungsmodul (703) ferner umfasst:
eine Benachrichtigungseinheit, konfiguriert zum Benachrichtigen der Informationen, dass die Netzwerkvorrichtung (602) über die Quellenwechselkennung verfügt, zu Netzwerkvorrichtungen im Übertragungsweg, wenn der Übertragungsweg zu der zweiten Betriebsmittel bereitstellenden Instanz (603) eingerichtet wird, und
wobei die Netzwerkvorrichtung (602) als ein Partnerknoten in einem Partner-zu-Partner-Netzwerk fungiert.

7. Netzwerkvorrichtung nach Anspruch 6, ferner umfassend:
ein Konzeptmodul, konfiguriert zum Bereitstellen eines Suchkonzepts, das eingesetzt wird, wenn das Suchmodul nach der zweiten Betriebsmittel bereitstellenden Instanz (603) sucht.

8. Netzwerkvorrichtung nach Anspruch 6 oder 7, ferner umfassend:
ein Aufrechterhaltungsmodul, konfiguriert zum Aufrechterhalten der Verbindung mit den empfangenden Enden, nachdem das Erhaltungsmodul (701) die Informationen zum Wechseln der Betriebsmittel bereitstellenden Instanz erhält, und Senden der erhaltenen Betriebsmittel durch einen ursprünglichen Übertragungsweg zwischen der Netzwerkvorrichtung (602) und den empfangenden Enden zu den empfangenden Enden, nachdem Betriebsmittel von der zweiten Betriebsmittel bereitstellenden Instanz (603) erhalten wurden.

9. System zum Wechseln einer Quelle, umfassend eine Netzwerkvorrichtung (602) nach einem der Ansprüche 6-8, eine erste Betriebsmittel bereitstellende Instanz (601) und eine zweite Betriebsmittel bereitstellende Instanz (603), wobei
die erste Betriebsmittel bereitstellende Instanz (601) konfiguriert ist zum Bereitstellen von Betriebsmitteln für empfangende Enden durch die Netzwerkvorrichtung (602);
die Netzwerkvorrichtung (602) konfiguriert ist zum Erhalten von Informationen zum Wechseln einer Betriebsmittel bereitstellenden Instanz, Erhalten einer Quellenwechselkennung, Suchen nach der zweiten Betriebsmittel bereitstellenden Instanz (603), die die gleichen Betriebsmittel wie die erste Betriebsmittel bereitstellende Instanz (601) bereitstellt, gemäß den Informationen, Einrichten eines Übertragungswegs zu der zweiten Betriebsmittel bereitstellenden Instanz (603) und Benachrichtigen von Netzwerkvorrichtungen im Übertragungsweg über die Information, dass die Netzwerkvorrichtung (602) über die Quellenwechselkennung verfügt; und
die zweite Betriebsmittel bereitstellende Instanz (603) konfiguriert ist zum Bereitstellen der Betriebsmittel durch die Netzwerkvorrichtung (602) für die empfangenden Enden, nachdem das Wechseln abgeschlossen ist.

10. System zum Wechseln einer Quelle nach Anspruch 9, wobei die Netzwerkvorrichtung (602) mit der ersten Betriebsmittel bereitstellenden Instanz (601) verbunden ist und konfiguriert ist zum Erhalten der Informationen zum Wechseln der Betriebsmittel bereitstellenden Instanz, Erhalten eines Quellenwechsels, Suchen nach der zweiten Betriebsmittel bereitstellenden Instanz (603), die die gleichen Betriebsmittel wie die erste Betriebsmittel bereitstellende Instanz (601) bereitstellt, gemäß einem lokalen Suchkonzept, und Einrichten des Übertragungswegs zu der zweiten Betriebsmittel bereitstellenden Instanz (603), die gefunden wurde; oder
die Netzwerkvorrichtung (602) konfiguriert ist zum Erhalten der Informationen zum Wechseln der Betriebsmittel bereitstellenden Instanz, Erhalten einer Quellenwechselkennung, Suchen nach einer zweiten Netzwerkvorrichtung, die den gleichen Betriebsmitteldienst wie die erste Betriebsmittel bereitstellende Instanz (601) bereitstellt, gemäß einem Netzwerk-Suchkonzept, so dass die zweite Netzwerkvorrichtung die zweite Betriebsmittel bereitstellende Instanz (603) erhält, die den gleichen Betriebsmitteldienst wie die erste Betriebsmittel bereitstellende Instanz (601) bereitstellt, und Einrichten des Übertragungswegs zu der zweiten Betriebsmittel bereitstellenden Instanz (603) durch die zweite Netzwerkvorrichtung.

11. System zum Wechseln einer Quelle nach Anspruch 9, wobei die Netzwerkvorrichtung (602) mit den empfangenden Enden verbunden ist und konfiguriert ist zum Erhalten der Informationen zum Wechseln der Betriebsmittel bereitstellenden Instanz, Erhalten einer Quellenwechselkennung, Suchen nach der zweiten Betriebsmittel bereitstellenden Instanz (603), die die gleichen Betriebsmittel wie die erste Betriebsmittel bereitstellende Instanz (601) bereitstellt, gemäß einem lokalen Suchkonzept, und Einrichten des Übertragungswegs zu der zweiten Betriebsmittel bereitstellenden Instanz (603), die gefunden wurde; oder
die Netzwerkvorrichtung (602) konfiguriert ist zum Erhalten der Informationen zum Wechseln der Betriebsmittel bereitstellenden Instanz, Erhalten einer Quellenwechselkennung, Suchen nach einer zweiten Betriebsmittel bereitstellenden Instanz, die die gleichen Betriebsmittel wie die erste Betriebsmittel bereitstellende Instanz (601) bereitstellt, gemäß einem Netzwerk-Suchkonzept, so dass die zweite Netzwerkvorrichtung die zweite Betriebsmittel bereitstellende Instanz (603), die die gleichen Betriebsmittel wie die erste Betriebsmittel bereitstellende Instanz (601) bereitstellt, erhält, und Einrichten des Übertragungswegs zu der zweiten Betriebsmittel bereitstellenden Instanz (603).

## Revendications

1. Procédé de commutation de source, appliqué à un réseau de poste à poste, P2P, comprenant les étapes suivantes :
obtenir, par un dispositif de réseau (602) agissant comme noeud homologue du réseau P2P, des informations pour commuter une entité fournissant des ressources lors de l'envoi de ressources obtenues d'une première entité fournissant des ressources (601) à des extrémités de réception ;
rechercher (102 ; 202), par le dispositif de réseau (602), une deuxième entité fournissant des ressources (603) qui fournit les mêmes ressources que la première entité fournissant des ressources (601) suivant les informations ;
établir (103 ; 203) un chemin de transmission vers la deuxième entité fournissant des ressources (603) ;
obtenir, par le dispositif de réseau (602), les ressources de la deuxième entité fournissant des ressources (603) par l'intermédiaire du chemin de transmission ;
où, après l'étape comprenant d'obtenir les informations pour commuter l'entité fournissant des ressources, le procédé comprend en outre l'étape suivante :
obtenir, par le dispositif de réseau, un identifiant de commutation de source ; et
en conséquence, l'étape comprenant d'établir le chemin de transmission vers la deuxième entité fournissant des ressources comprend en outre l'étape suivante :
notifier aux dispositifs de réseau sur le chemin de transmission l'information que le dispositif de réseau a l'identifiant de commutation de source.

2. Procédé de commutation de source selon la revendication 1, dans lequel le dispositif de réseau (602) est connecté à la première entité fournissant des ressources (601) ; et en conséquence les étapes :
rechercher (102 ; 202), par le dispositif de réseau (602), une deuxième entité fournissant des ressources (603) qui fournit les mêmes ressources que la première entité fournissant des ressources (601) suivant les informations, et établir un chemin de transmission vers la deuxième entité fournissant des ressources (603) comprennent les étapes suivantes :
rechercher la deuxième entité fournissant des ressources (603) qui fournit les mêmes ressources que la première entité fournissant des ressources (601) suivant une politique de recherche locale, et établir le chemin de transmission vers la deuxième entité fournissant des ressources (603) qui a été trouvée ; ou
rechercher un second dispositif de réseau qui fournit le même service de ressources que la première entité fournissant des ressources (601) suivant une politique de recherche de réseau, de manière à ce que le second dispositif de réseau obtienne la deuxième entité fournissant des ressources (603) qui fournit le même service de ressources, et établir, par le second dispositif de réseau, le chemin de transmission vers la deuxième entité fournissant des ressources (603) obtenue qui fournit le même service de ressources.

3. Procédé de commutation de source selon la revendication 1, dans lequel le dispositif de réseau (602) est connecté aux extrémités de réception ; et en conséquence les étapes :
rechercher (102 ; 202), par le dispositif de réseau (602), une deuxième entité fournissant des ressources (603) qui fournit les mêmes ressources que la première entité fournissant des ressources (601) suivant les informations, et établir (103 ; 203) un chemin de transmission vers la deuxième entité fournissant des ressources (603) comprennent les étapes suivantes :
rechercher une deuxième entité fournissant des ressources (603) qui fournit les mêmes ressources que la première entité fournissant des ressources (601) suivant une politique de recherche locale, et établir un chemin de transmission vers la deuxième entité fournissant des ressources (603) qui a été trouvée ; ou
rechercher un second dispositif de réseau qui fournit le même service de ressources que la première entité fournissant des ressources (601) suivant une politique de recherche de réseau, de manière à ce que le second dispositif de réseau obtienne une deuxième entité fournissant des ressources (603) qui fournit le même service de ressources, et établir le chemin de transmission vers la deuxième entité fournissant des ressources (603) obtenue qui fournit le même service de ressources.

4. Procédé de commutation de source selon l'une quelconque des revendications 1 à 3, dans lequel, après l'étape comprenant d'obtenir les informations pour commuter l'entité fournissant des ressources, le procédé comprend en outre les étapes suivantes :
maintenir, par le dispositif de réseau (602), la connexion avec les extrémités de réception et, après obtention des ressources de la deuxième entité fournissant des ressources (603), envoyer les ressources obtenues aux extrémités de réception par l'intermédiaire d'un chemin de transmission original entre le dispositif de réseau et les extrémités de réception.

5. Procédé de commutation de source selon la revendication 4, comprenant en outre :
après obtention d'informations pour commuter la deuxième entité fournissant des ressources (603), rechercher, de manière continue, par le dispositif de réseau (602), une troisième entité fournissant des ressources qui fournit les mêmes ressources, et établir un chemin de transmission vers la troisième entité fournissant des ressources qui fournit les mêmes ressources et qui a été trouvée par une recherche continue.

6. Dispositif de réseau (602) de commutation de source, **caractérisé en ce qu'**il comprend :
un module d'obtention (701), configuré pour obtenir des informations pour commuter une entité fournissant des ressources lors de l'envoi de ressources obtenues d'une première entité fournissant des ressources (601) à des extrémités de réception ;
un module d'obtention d'identifiant de commutation de source, configuré pour obtenir un identifiant de commutation de source après que le module d'obtention (701) a obtenu les informations pour commuter l'entité fournissant des ressources ;
un module de recherche (702), configuré pour rechercher une deuxième entité fournissant des ressources (603) qui fournit les mêmes ressources que la première entité fournissant des ressources (601) suivant les informations pour commuter l'entité fournissant des ressources obtenues par le module d'obtention (701) ; et
un module d'établissement (703), configuré pour établir un chemin de transmission vers la deuxième entité fournissant des ressources (603) qui a été trouvée par le module de recherche (702), et obtenir les ressources de la deuxième entité fournissant des ressources (603) par l'intermédiaire du chemin de transmission ;
où le module d'établissement (703) comprend en outre :
une unité de notification, configurée pour notifier l'information que le dispositif de réseau (602) a l'identifiant de commutation de source à des dispositifs de réseau sur le chemin de transmission, lors de l'établissement du chemin de transmission vers la deuxième entité fournissant des ressources (603), et
le dispositif de réseau (602) agit comme noeud homologue dans un réseau de poste à poste.

7. Dispositif de réseau selon la revendication 6, comprenant en outre :
un module de politique, configuré pour fournir une politique de recherche adoptée lorsque le module de recherche recherche la deuxième entité fournissant des ressources (603).

8. Dispositif de réseau selon la revendication 6 ou la revendication 7, comprenant en outre :
un module de maintien configuré pour maintenir la connexion avec les extrémités de réception après que le module d'obtention (701) a obtenu les informations pour commuter l'entité fournissant des ressources, et pour envoyer les ressources obtenues aux extrémités de réception par l'intermédiaire d'un chemin de transmission original entre le dispositif de réseau (602) et les extrémités de réception après que les ressources ont été obtenues de la deuxième entité fournissant des ressources (603).

9. Système de commutation de source, comprenant un dispositif de réseau (602) suivant l'une quelconque des revendications 6 à 8, une première entité fournissant des ressources (601) et une deuxième entité fournissant des ressources (603), où
la première entité fournissant des ressources (601) est configurée pour fournir des ressources à des extrémités de réception par l'intermédiaire du dispositif de réseau (602) ;
le dispositif de réseau (602) est configuré pour obtenir des informations pour commuter une entité fournissant des ressources, pour obtenir un identifiant de commutation de source, pour rechercher la deuxième entité fournissant des ressources (603) qui fournit les mêmes ressources que la première entité fournissant des ressources (601) suivant les informations, pour établir un chemin de transmission vers la deuxième entité fournissant des ressources (603), et pour notifier aux dispositifs de réseau sur le chemin de transmission l'information que le dispositif de réseau (602) a l'identifiant de commutation de source ; et
la deuxième entité fournissant des ressources (603) est configurée pour fournir les ressources aux extrémités de réception par l'intermédiaire du dispositif de réseau (602) une fois que la commutation a été effectuée.

10. Système de commutation de source selon la revendication 9, dans lequel le dispositif de réseau (602) est connecté à la première entité fournissant des ressources (601), et est configuré pour obtenir les informations pour commuter l'entité fournissant des ressources, pour obtenir une commutation de source, pour rechercher la deuxième entité fournissant des ressources (603) qui fournit les mêmes ressources que la première entité fournissant des ressources (601) suivant une politique de recherche locale, et pour établir le chemin de transmission vers la deuxième entité fournissant des ressources (603) qui a été trouvée ; ou
le dispositif de réseau (602) est configuré pour obtenir les informations pour commuter l'entité fournissant des ressources, pour obtenir un identifiant de commutation de source, pour rechercher un second dispositif de réseau qui fournit le même service de ressources que la première entité fournissant des ressources (601) suivant une politique de recherche de réseau, de sorte que le second dispositif de réseau obtienne la deuxième entité fournissant des ressources (603) qui fournit le même service de ressources que la première entité fournissant des ressources (601), et pour établir le chemin de transmission vers la deuxième entité fournissant des ressources (603) par l'intermédiaire du second dispositif de réseau.

11. Système de commutation de source selon la revendication 9, dans lequel le dispositif de réseau (602) est connecté aux extrémités de réception, et est configuré pour obtenir les informations pour commuter l'entité fournissant des ressources, pour obtenir un identifiant de commutation de source, pour rechercher la deuxième entité fournissant des ressources (603) qui fournit les mêmes ressources que la première entité fournissant des ressources (601) suivant une politique de recherche locale, et pour établir le chemin de transmission vers la deuxième entité fournissant des ressources (603) qui a été trouvée ; ou
le dispositif de réseau (602) est configuré pour obtenir les informations pour commuter l'entité fournissant des ressources, pour obtenir un identifiant de commutation de source, pour rechercher un second dispositif de réseau qui fournit le même service de ressources que la première entité fournissant des ressources (601) suivant une politique de recherche de réseau, de sorte que le second dispositif de réseau obtienne la deuxième entité fournissant des ressources (603) qui fournit le même service de ressources que la première entité fournissant des ressources (601), et pour établir le chemin de transmission vers la deuxième entité fournissant des ressources (603).
